(19) Europäisches Patentamt
European Patent Office
Office européen des brevets

(11) Veröffentlichungsnummer: **0 019 699**
**B1**

(12) # EUROPÄISCHE PATENTSCHRIFT

(45) Veröffentlichungstag der Patentschrift: **21.04.82**

(51) Int. Cl.³: **C 01 B 7/01**

(21) Anmeldenummer: **80101831.8**

(22) Anmeldetag: **05.04.80**

(54) **Verfahren zur Gewinnung von gasförmigem Chlorwasserstoff aus verdünnter wässriger Salzsäure.**

(30) Priorität: **30.05.79 DE 2921916**

(43) Veröffentlichungstag der Anmeldung: **10.12.80 Patentblatt 80/25**

(45) Bekanntmachung des Hinweises auf die Patenterteilung: **21.04.82 Patentblatt 82/16**

(84) Benannte Vertragsstaaten: **BE FR GB IT NL**

(56) Entgegenhaltungen:
**DE-A-1 667 537**
**DE-A1-2 633 640**
**DE-A1-2 834 252**
**DE-B1-2 805 933**
**US-A-4 036 939**
**DE-C-886 893**
**US-A-3 186 809**

(73) Patentinhaber: **CHEMISCHE WERKE HÜLS AG, Postfach 1320, D-4370 Marl 1 (DE)**

(72) Erfinder: **Ziegenbein, Willi, Dr., Brandenburgische Strasse 9, D-4370 Marl (DE)**
Erfinder: **von Praun, Ferdinand, Dr., Am Schmöningsberg 8, D-4358 Haltern (DE)**

**EP 0 019 699 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Verfahren zur Gewinnung von gasförmigem Chlorwasserstoff aus verdünnter wäßriger Salzsäure

Bei vielen technischen Prozessen fällt Chlorwasserstoff als Nebenprodukt in Form verdünnter wäßriger Salzsäuren an, für die es nur einen begrenzten technischen Anwendungsbereich gibt. Um den in Form einer solchen verdünnten, wäßrigen Salzsäure vorliegenden Chlorwasserstoff als Chemierohstoff, beispielsweise für die Herstellung von Vinylchlorid, Ethylchlorid, Chloropren oder Chlorsulfonsäure nutzen zu können, muß er als wasserfreies Gas isoliert werden.

Die hierzu erforderliche destillative Aufarbeitung verdünnter Säuren scheidet aus wirtschaftlichen Gründen aus, weil zu große Energiemengen zur Verdampfung des Wassers aufgebracht werden müßten. Eine extraktive Isolierung des GCl-Gases scheiterte bisher an den ungünstigen Verteilungskoeffizienten zwischen HCl und Extraktionsmitteln, wie z. B. Pentanolen. Als Extraktionsmittel mit weitaus günstigeren Verteilungskoeffizienten bieten sich längerkettige Amine an, die sowohl selbst als auch in Form ihrer Hydrochloride wasserunlöslich sein müssen. Mit ihrer Hilfe ist es möglich, den Chlorwasserstoff nahezu vollständig aus einer verdünnten Salzsäure abzutrennen.

Die anschließende thermische Spaltung der so gewonnenen Aminhydrochloride und die Isolierung des wasserfreien Chlorwasserstoffs können sodann nach dem in DE-A-2 633 640 und DE-C-2 805 933 beschriebenen Verfahren erfolgen.

Das Verfahren gemäß DE-A-2 633 640 ist dadurch gekennzeichnet, daß man

a) die wäßrige Salzsäure mit einem Amin oder einem Gemisch aus einem Amin und einem inerten, mit Wasser nicht mischbaren, niedriger als das verwendete Amin siedenden Lösungsmittel extrahiert, wobei als Amin verwendet werden tertiäre Alkylamine, tertiäre Aryldialkylamine, sekundäre Arylalkylamine, primäre Alkylarylamine oder Mischungen davon, die 14 bis 36 Kohlenstoffatome in den stickstoffgebundenen Seitenketten enthalten, davon höchstens eine stickstoffgebundene Methylgruppe und mindestens einen mindestens 6 Kohlenstoffatome enthaltenden aliphatischen Rest, und bei denen die Säurekonstante $K_a$ des Amins kleiner als $10^{-3}$ ist,
b) dem Extrakt ein inertes, mit Wasser nicht mischbares, niedriger als das verwendete Amin siedendes Lösungsmittel zugibt, sofern das Lösungsmittel nicht schon in Stufe a) zugegeben wurde,
c) den Extrakt destilliert, die entstehenden Dämpfe kondensiert, aus dem zweiphasigen Kondensat kontinuierlich das Wasser abtrennt und die organische Phase in den Destillationsprozeß zurückgibt und
d) nach Entfernen des Wassers den Extrakt bei Sumpftemperaturen zwischen 100 und 250°C am Rückfluß destilliert und den am Kopf der Kolonne freiwerdenden gasförmigen Chlorwasserstoff abzieht.

Nach dem Verfahren gemäß DE-C-2 805 933.8 wird in Abwandlung des Verfahrens nach DE-A-2 633 640 der gasförmige Chlorwasserstoff dadurch gewonnen, daß man das Gemisch aus Aminhydrochlorid und Lösungsmittel auf eine Temperatur unterhalb des Siedepunktes des Lösungsmittels erhitzt und den freiwerdenden Chlorwasserstoff unter Durchleiten eines inerten Gasstromes abtrennt.

Die beiden genannten Verfahren gestatten zwar erstmalig die Gewinnung von gasförmigem Chlorwasserstoff aus verdünnter wäßriger Salzsäure mit Hilfe spezieller Amine und durch anschließende Thermolyse der gebildeten Aminhydrochloride, sie sind jedoch immer noch mit Mängeln behaftet. So besteht der Hauptmangel darin, daß sich das tertiäre aliphatische Amin abhängig von der Struktur und der Höhe der thermischen Belastung in mehr oder weniger kurzer Zeit u. a. unter Bildung primärer und sekundärer aliphatischer Amine und Alkylchloride zersetzt und der Wirkungsgrad der Spaltung dadurch in zunehmendem Maße sinkt, da primäre und sekundäre aliphatische Amine zwar gut Chlorwasserstoff aus verdünnter Salzsäure extrahieren, ihre Hydrochloride sich jedoch thermisch kaum spalten lassen. Es kommt somit zu einer zunächst unmerklichen, mit fortschreitender Zersetzung jedoch immer stärker ansteigenden Bildung der störenden Nebenprodukte.

Ein Verfahren zur Gewinnung von Chlorwasserstoff durch Extraktion von verdünnter Salzsäure mit Aminen kann aber nur dann wirtschaftlich arbeiten, wenn das vergleichsweise teure Amin möglichst verlustfrei im Kreise gefahren werden kann. Dies kann z. B. gemäß dem Verfahren nach DE-C-2 834 252.1 dadurch erreicht werden, daß man das Gemisch aus Amin, Lösemitteln und gegebenenfalls Verunreinigungen vor dem Einsatz bzw. der Rückführung in den Extraktionsprozeß ganz oder teilweise über ein Adsorptionsmittel leitet.

Die adsorptive Aminreinigung ist jedoch technisch aufwendig, so daß es Aufgabe der vorliegenden Erfindung war, ein weiteres, und zwar weniger aufwendiges Verfahren zur Gewinnung von gasförmigem Chlorwasserstoff durch Extraktion von verdünnter wäßriger Salzsäure mit tertiären aliphatischen Aminen und anschließende Spaltung des Aminhydrochlorids zu finden, bei dem die Bildung der unerwünschten Zersetzungsprodukte entweder verhindert oder doch weitgehend zurückgedrängt wird.

Diese Aufgabe wurde dadurch gelöst, daß man in der Stufe a) tertiäre Amine mit hohem Reinheitsgrad einsetzt und der Akkumulation von Beimengungen und Zersetzungsprodukten vorbeugt, indem man beim Auftreten bereits

geringer Mengen von primären und sekundären Aminen bzw. deren Hydrochloriden zum Amin/Lösemittel-Gemisch ein Carbonsäurechlorid zugibt, um diese sogenannten Abbauelemente in Form ihrer Amide weitgehend unschädlich zu machen. Die für das erfindungsgemäße Verfahren geeigneten Amine sind tertiäre Alkylamine, die 14 bis 36 Kohlenstoffatome in den stickstoffgebundenen Seitenketten besitzen. Eine dieser Seitenketten muß mindestens 6 Kohlenstoffatome enthalten, also ein Cyclohexyl-, Hexyl- oder Isohexylrest sein, und die Aminogruppe darf höchstens eine Methylgruppe tragen.

Die Dissoziationskonstante $K_a$ der Gleichgewichtsreaktion

$$NR_3H^+ + H_2O \rightleftharpoons NR_3 + H_3O^+$$

muß, um eine ausreichende Extraktion des Chlorwasserstoffs sicherzustellen, kleiner als $10^{-3}$ sein. Die Dissoziationskonstante $K_a$ ist für viele Amine der einschlägigen Literatur, z. B. Handbook of Chemistry and Physics, 51. Ed. (1970—71), Seite D 117 ff., zu entnehmen.

Geeignete Amine sind z. B. Trihexylamin, Tricyclohexylamin, Triheptylamin, Trioctylamin, Cyclohexyl-diisooctylamin, Cyclohexyl-4-heptyl-octylamin, Cyclohexyl-2-ethylhexyl-octylamin, 2-Ethylhexyl-4-heptyl-octylamin, Tri-2-ethylhexylamin, Di-2-ethylhexyl-methylamin, Didecylethylamin, Tridodecylamin, Didodecyl-methylamin, Dodecyl-di-isopropylamin, Dodecyl-dibutylamin, Dodecyl-diisobutylamin, Dodecylisobutyl-methylamin, Diisopentadecyl-methylamin, Diisopentadecyl-ethylamin, Diisopentadecylisopropylamin.

Als Lösemittel für die Amine verwendet man organische Flüssigkeiten, die unter den Bedingungen des Verfahrens gegen Wasser, Chlorwasserstoff, Amine und Temperaturbelastung inert sind.

Besonders geeignet sind für das Verfahren möglichst unpolare Verbindungen, wie aromatische und aliphatische Kohlenwasserstoffe, z. B. Xylole, Cumol, Cymole, Ethylbenzol, Trimethylbenzole, 1.2.4-Triethylbenzol, 1.3.5-Triethylbenzol, 1.2.3.4-Tetramethylbenzol, 1.2.3.5-Tetramethylbenzol, 3-Phenylpentan, Dodecylbenzol, Nonan, Decan, Undecan, Dodecan, Tetradecan, Decalin und Tetralin. Die zweckmäßige Konzentration des tertiären Amins in der Lösung richtet sich nach der Art des Amins und der Menge der abzutrennenden Verunreinigungen. Im allgemeinen arbeitet man mit einem Amin-Lösemittel-Verhältnis von 1 : 1 bis 1 : 10.

Für das erfindungsgemäße Verfahren bevorzugt geeignete Säurechloride sind solche von geradkettigen oder verzweigten gesättigten aliphatischen Carbonsäuren, die 2 bis 22, vorzugsweise 6 bis 18 Kohlenstoffatome im Molekül enthalten. Weiterhin können Säurechloride von arylsubstituierten gesättigten Fettsäuren sowie von aromatischen Carbonsäuren, die jeweils 7 bis 15 Kohlenstoffatome im Molekül enthalten, verwendet werden. Geeignete Säurechloride sind z. B. Essigsäurechlorid, Propionsäurechlorid, Buttersäurechlorid, Isobuttersäurechlorid, Valeriansäurechlorid, Isovaleriansäurechlorid, Pivalinsäurechlorid, Capronsäurechlorid, Önanthsäurechlorid, Caprylsäurechlorid, 2-Ethylhexansäurechlorid, Pelargonsäurechlorid, Caprinsäurechlorid, Laurinsäurechlorid, Myristinsäurechlorid, Palmitinsäurechlorid, Stearinsäurechlorid, Arachinsäurechlorid, Behensäurechlorid, Benzoesäurechlorid, Toluylsäurechloride, Ethylbenzoesäurechloride, Dimethylbenzoesäurechloride, Trimethylbenzoesäurechloride, Tetramethylbenzoesäurechloride, 1-Naphthoesäurechlorid, 2-Naphthoesäurechlorid, Phenylessigsäurechlorid, Tolylessigsäurechlorid, $\beta$-Phenylpropionsäurechlorid, $\gamma$-Phenylbuttersäurechlorid, $\delta$-Phenylvaleriansäurechlorid und $\beta$-1-Naphthylpropionsäurechlorid.

Im allgemeinen führt man das erfindungsgemäße Verfahren, speziell die Acylierung des primären und sekundären Amins bzw. derer Hydrochloride, in einem der Spaltkolonne nachgeschalteten Reaktionsgefäß durch, indem man nach Zugabe mindestens der stöchiometrischen Menge Säurechlorid bei Raumtemperatur (15—30° C) kurze Zeit, im allgemeinen nicht länger als eine Stunde, rührt. Eine andere Ausführungsform besteht darin, daß man das Säurechlorid der Destillationsblase der Spaltkolonne direkt zuführt, wo bei den dort herrschenden hohen Temperaturen (über 100° C) momentane Umsetzung erfolgt. Eine dritte Möglichkeit besteht noch darin, daß man den entwässerten Extrakt mit Säurechlorid in der bei der ersten Ausführungsform beschriebenen Weise behandelt, bevor er der Spaltung unterworfen wird.

Das erfindungsgemäße Verfahren läßt sich sowohl in kontinuierlicher als auch in diskontinuierlicher Fahrweise betreiben.

Ein wesentlicher Vorteil des erfindungsgemäßen Verfahrens besteht außer in der Vermeidung von Aminverlusten noch darin, daß mit weniger stabilen Aminen die praktische Durchführung der HCl-Extraktion und Hydrochloridspaltung überhaupt erst ermöglicht wird, wie am Beispiel des Systems Trioctylamin-Dodecan gefunden wurde. In anderen Fällen ergibt sich ein erheblich größerer Temperaturspielraum, nämlich von 100 bis 300° C, in dem die Spaltung wirtschaftlich betrieben werden kann.

Selbstverständlich können auch entsprechende Extrakte, die auf andere Weise als durch Extraktion wäßriger Salzsäure erhalten wurden, nach dem erfindungsgemäßen Verfahren in Chlorwasserstoff und Amin zerlegt werden.

Das erfindungsgemäße Verfahren wird durch die nachfolgenden Beispiele und Vergleichsbeispiele erläutert.

Alle Prozentangaben sind — sofern nicht anders angegeben — Gewichtsprozente.

In den Vergleichsbeispielen A und B soll in vergleichenden Versuchen gezeigt werden, daß bei Zusatz von sekundärem Aminhydrochlorid zum tertiären Aminhydrochlorid bei der Thermolyse eine autokatalytische Zersetzung des tertiären Amins zu beobachten ist.

## Vergleichsbeispiel A

(Katalytische Wirkung von Abbauaminen)

In einem 500 ml Dreihalskolben, ausgerüstet mit Gaseinleitungsrohr, Thermometer und Wasserabscheider mit aufgesetztem Rückflußkühler, wurden 77,9 g (0,2 Mol) Tri-(2-ethylhexyl)-aminhydrochlorid in der gleichen Gewichtsmenge Xylol gelöst. Durch Eintauchen des Kolbens in ein auf 220°C vorgeheiztes Ölbad wurde der Kolbeninhalt schnell zum Sieden gebracht, wobei ein gleichmäßiger Stickstoffstrom von 30 l/h eingegast wurde. Der sich abspaltende Chlorwasserstoff wurde in zwei hintereinandergeschalteten mit Natronlauge beschickten Vorlagen aufgefangen und titrimetrisch bestimmt. Im Verlaufe von 6 Stunden spalteten sich 97,3% der theoretisch möglichen Menge an Chlorwasserstoff aus dem Hydrochlorid ab. Das Sumpfprodukt wurde nach Behandlung mit Natronlauge gaschromatographisch auf seine Zusammensetzung untersucht. Es wurden $<0,1\%$ sek. Amin als Zersetzungsprodukt gefunden.

## Vergleichsbeispiel B

(Katalytische Wirkung von Abbauaminen)

77,9 g (0,2 Mol) Tri-(2-ethylhexyl)-aminhydrochlorid wurden in einer Apparatur gemäß Vergleichsbeispiel A nach Zusatz von 7,8 g (0,028 Mol) Di-(2-ethylhexyl)-aminhydrochlorid in 78 g Xylol der Thermolyse unterworfen. Im Verlauf von 6 Stunden spalteten sich 92,7% der theoretisch möglichen Menge an Chlorwasserstoff ab. Das Sumpfprodukt enthielt nach Behandlung mit Natronlauge, lösemittelfrei gerechnet, 84,9% Tri-(2-ethylhexyl)-amin und 14,1% Di-(2-ethylhexyl)-amin. Da das Einsatzprodukt 8,8% sek. Amin enthielt, hat sich folglich während der Hydrochloridspaltung 5,3% Zersetzungsprodukt zusätzlich gebildet.

## Beispiel 1

Der Versuch wurde in einer kontinuierlich betriebenen Anlage zur Extraktion von Salzsäure mit Aminen und Spaltung der gebildeten Aminhydrochloride durchgeführt. Der Extraktionsteil besteht aus einer 0,5 m hohen, mit Raschigringen (4 mm) gefüllten Säule (∅ 20 mm), in der einer von oben nach unten fließenden Salzsäure ein Gemisch aus Lösemittel und Amin entgegenströmt. Am Kopf der Extraktionssäule wird der hydrochloridhaltige Extrakt abgenommen und auf Spaltkolonne (Höhe: 1500 mm, ∅ 20 mm) gegeben. Das mit dem Extrakt eingeschleppte Wasser wird am Kopf der Kolonne mit Hilfe eines aufgesetzten Wasserauskreisers in Form von konz. Salzsäure entfernt, wobei das Lösemittel als Schleppmittel für das Wasser dient. (Die Entfernung des Wassers ohne HCl-Verlust kann auch in einer vorgeschalteten Destillationsstufe erfolgen.) Der bei der Hydrochloridspaltung anfallende Chlorwasserstoff wird über Kopf der Kolonne abgezogen und passiert hierbei den Wasserauskreiser, während das HCl-freie Amin-Lösemittelgemisch aus dem Sumpf über einen Kühler entfernt und wieder in die Extraktion eingefahren wird. In gewissen Zeitabständen wird gaschromatografisch der Gehalt an primärem und sekundärem Amin im Amin-Lösemittelgemisch des Sumpfes der Spaltkolonne ermittelt und diesem zur Inaktivierung der Abbauamine die mindestens stöchiometrische Menge an Säurechlorid zugesetzt. Die Anlage wird unter Stickstoff als Schutzgas betrieben.

Mit einer Mischung aus 345 g Tri-(2-ethylhexyl)-amin und 345 g 5-tert.-Butyl-m-xylol (250 ml/h) wurden in 298 Stunden 19 105 g 10,7prozentige Kochsalz-haltige Salzsäure (60 ml/h) im Gegenstrom bei 55°C extrahiert. Der Extrakt wurde in der Spaltkolonne bei 228 bis 232°C der Hydrochloridspaltung unterworfen; er lieferte insgesamt 1874 g Chlorwasserstoff, der zu etwa einem Drittel als konz. Salzsäure neben Chlorwasserstoffgas anfiel. Da die Spaltung praktisch quantitativ verläuft, errechnet sich aus den angegebenen HCl-Mengen eine Extraktionsrate von 91,7%.

Zur Inaktivierung der Abbauamine wurde im Amin-Lösemittelgemisch des Ablaufes der Spaltkolonne ständig der Gehalt an prim. und sek. Amin bestimmt. Nach Erreichen eines Wertes von ca. 0,2% Abbauamin wurde jeweils die stöchiometrische Menge an Acetylchlorid dem Sumpf der Spaltkolonne zugesetzt. Während der Versuchsdauer wurde das in gewissen Zeitabständen immer wieder auftretende Abbauamin durch insgesamt 1,3 g Acetylchlorid unschädlich gemacht.

Nach Beendigung des Versuches wurden von 345 g Tri-(2-ethylhexyl)-amin unverändert zurückgewonnen; das entspricht einem Verlust von 45,3 g oder 13,1%. Bezogen auf erzeugten Chlorwasserstoff errechnet sich ein Aminverlust von 2,4%.

## Beispiel 2

In der Apparatur gemäß Beispiel 1 wurden mit einer Mischung aus 358 g Tri-(2-ethylhexyl)-amin und 360 g 5-tert.-Butyl-m-xylol (250 ml/h) in 348 Stunden 24 901 g 9,5prozentige kochsalzhaltige Salzsäure (60 ml/h) im Gegenstrom bei 70°C extrahiert. Der Extrakt lieferte nach Hydrochloridspaltung 2086,5 g Chlorwasserstoff. Da die Spaltung praktisch quantitativ verläuft, errechnet sich somit eine Extraktionsrate von 88,2%.

Die Inaktivierung der Abbaumine wurde in der beschriebenen Weise mit Caprylsäurechlorid durchgeführt, und zwar wurden während der

Versuchsdauer insgesamt 2,9 g des Säurechlorids der Reaktionsmischung im Sumpf der Spaltkolonne zugesetzt.

Nach Versuchsende wurden von 358 g Tri-(2-ethylhxyl)-amin 291,1 g unverändert zurückgewonnen; das entspricht einem Verlust von 66,9 g oder 18,7%. Bezogen auf erzeugten Chlorwasserstoff errechnet sich ein Aminverlust von 3,2%.

Beispiel 3

In der Apparatur gemäß Beispiel 1 wurden mit einer Mischung aus 350 g Tri-(2-ethylhexyl)-amin und 350 g 5-tert.-Butyl-m-xylol (250 m/h) in 307 Stunden 18 860 g 11,2prozentige kochsalzhaltige Salzsäure (60 ml/h) im Gegenstrom bei 70°C extrahiert. Der Extrakt lieferte nach Hydrochloridspaltung 1911 g Chlorwasserstoff. Da die Spaltung praktisch quantitativ verläuft, errechnet sich somit eine Extraktionsrate von 90,5%.

Die Inaktivierung der Abbauamine wurde in der beschriebenen Weise mit Stearoylchlorid durchgeführt, und zwar wurden während der Versuchsdauer insgesamt 4,7 g des Säurechlorids dem Sumpf der Spaltkolonne zugesetzt. Nach Versuchsende wurden von 350 g Tri-(2-ethylhexyl)-amin 298,6 g unverändert zurückgewonnen; das entspricht einem Verlust von 51,4 g oder 14,7%. Bezogen auf erzeugten Chlorwasserstoff errechnet sich ein Aminverlust von 2,7%.

Vergleichsbeispiel C

(Vergleich zu den Beispielen 1—3)

In der Apparatur gemäß Beispiel 1 wurden mit einer Mischung aus 358 g Tri-(2-ethylhexyl)-amin und 366 g 5-tert.-Butyl-m-xylol (250 ml/h) in 259 Stunden 15 370 g 10,8prozentige kochsalzhaltige Salzsäure (60 ml/h) im Gegenstrom bei 70°C extrahiert. Der Extrakt lieferte nach Hydrochloridspaltung 1060 g Chlorwasserstoff. Da die Spaltung quantitativ verläuft, errechnet sich somit eine Extraktionsrate von 63,9%.

Abbauamine wurden nicht bei diesem Versuch durch Acylierung unschädlich gemacht. Nach Beendigung des Experimentes ließen sich von 358 g Tri-(2-ethylhexyl)-amin nur noch 35,1 g unverändert zurückgewinnen; das entspricht einem Verlust von 322,9 g oder 90,2%. Bezogen auf erzeugten Chlorwasserstoff errechnet sich ein Aminverlust von 30,5%.

Beispiel 4

In der Apparatur gemäß Beispiel 1 wurden einige Änderungen vorgenommen, und zwar wurde im Extraktionsteil eine 2,5 m hohe mit Glaskugeln (4 mm) gefüllte Säule (Ø 30 mm) verwendet und die Hydrochloridspaltung in einer 2 m hohen Kolonne mit einem Durchmesser von 40 mm durchgeführt. Die Inaktivierung der Abbauamine erfolgte bei Raumtemperatur durch kontinuierliche Dosierung des Säurechlorids in die Amin-Lösemittelmischung, die zu diesem Zwecke ein dem Sumpf der Spaltkolonne nachgeschaltetes Rührgefäß durchfließt.

Mit einer Mischung aus 1250 g Trioctylamin und 5000 g Dodecan (850 ml/h) wurden in 288 Stunden 78 700 g 10,1prozentige kochsalzhaltige Salzsäure (250 ml/h) im Gegenstrom bei 70°C extrahiert. Der Extrakt wurde in der Spaltkolonne bei 228—230°C der Hydrochloridspaltung unterworfen; er lieferte insgesamt 5375 g Chlorwasserstoff, der zu 45% gasförmig und zu 55% in Form von konz. Salzsäure anfiel. Da die Spaltung nahezu quantitativ verläuft, errechnet sich aus den angegebenen HCl-Mengen eine Extraktionsrate von 67,6%.

Während der Dauer des Versuches wurden zur Inaktivierung der Abbauamine kontinuierlich dem Amin-Lösemittelgemisch insgesamt 316,8 g Stearoylchlorid zugesetzt. Nach Beendigung des Versuches wurden von 1250 g Trioctylamin 823,9 g unverändert zurückgewonnen; das entspricht einem Verlust von 426,1 g oder 34,1%. Bezogen auf erzeugten Chlorwasserstoff errechnet sich ein Aminverlust von 7,9%.

Vergleichsbeispiel D

(Vergleich zu Beispiel 4)

In der Apparatur gemäß Beispiel 4 wurde mit einer Mischung aus 1250 g Trioctylamin und 5000 g Dodecan eine 10prozentige kochsalzhaltige Salzsäure im Gegenstrom bei 70°C extrahiert.

Der Extrakt wurde bei 227°C der Hydrochloridspaltung unterworfen. Eine Inaktivierung der Abbauamine wurde nicht vorgenommen. Der Versuch mußte nach 18 Stunden aufgegeben werden, weil reichlich gebildetes Dioctylaminhydrochlorid Leitungen und Extraktionssäule verstopfte.

**Patentansprüche**

1. Verfahren zur Gewinnung von gasförmigem Chlorwasserstoff durch Extraktion von verdünnter wäßriger Salzsäure mit Aminen, indem man

a) die wäßrige Salzsäure mit einem Amin oder einem Gemisch aus einem Amin und einem inerten, mit Wasser nicht mischbaren, mindestens bei 120°C siedenden Lösemittel extrahiert, wobei tertiäre Alkylamine verwendet werden, die 14 bis 36 Kohlenstoffatome in den stickstoffgebundenen Seitenketten enthalten, davon höchstens eine stickstoffgebundene Methylgruppe und mindestens einen stickstoffgebundenen, mindestens 6 Kohlenstoffatome enthaltenden aliphatischen Rest, und bei denen die Säurekonstante $K_a$ des Amins kleiner als $10^{-3}$ ist,

b) dem Extrakt ein inertes, mit Wasser nicht mischbares, mindestens bei 120°C siedendes Lösemittel zugibt, sofern das Lösemittel nicht schon in Stufe a) zugegeben wurde,
c) den Extrakt destilliert, die entstehenden Dämpfe kondensiert, aus dem zweiphasigen Kondensat kontinuierlich das Wasser abtrennt und die organische Phase in den Destillationsprozeß zurückgibt,
d) den Extrakt nach Entfernung des Wassers am Rückfluß destilliert und den am Kopf der Kolonne freiwerdenden gasförmigen Chlorwasserstoff abzieht oder indem man den Chlorwasserstoff unterhalb des Siedepunktes des Lösemittels unter Durchleiten eines inerten Gasstromes abtrennt, und
e) das das Amin enthaltende Lösemittel in den Extraktionsprozeß zurückführt, dadurch gekennzeichnet, daß man dem Gemisch aus Amin, Lösemittel und gegebenenfalls Verunreinigungen vor dem Einsatz in die Extraktion oder nach der Entwässerung des Extraktes vor der Hydrochloridspaltung Carbonsäurechloride in mindestens stöchiometrischer Menge bezogen auf gebildete primäre und sekundäre Amine zusetzt.

2. Verfahren nach Anspruch 1, dadurch gekennzeichnet, daß man als inerte Lösemittel oberhalb 120°C siedende, geradkettige oder verzweigte aliphatische, cycloaliphatische oder aromatische, ganz oder weitgehend unpolare Kohlenwasserstoffe mit mindestens 6 bis 20 Kohlenstoffatomen verwendet.

3. Verfahren nach den Ansprüchen 1 und 2, dadurch gekennzeichnet, daß man Carbonsäurechloride von linearen und verzweigten aliphatischen Carbonsäuren, die 2 bis 22 Kohlenstoffatome im Molekül enthalten, einsetzt.

4. Verfahren nach den Ansprüchen 1 bis 3, dadurch gekennzeichnet, daß man die Spaltung der Aminhydrochloride bei Sumpftemperaturen von 120 bis 300°C durchführt.

**Claims**

1. A process for obtaining gaseous hydrogen chloride by extraction of dilute aqueous hydrochloric acid with an amine, comprising the steps of

a) extracting the aqueous hydrochloric acid with an amine or a mixture of an amine and an inert water-immiscible solvent boiling at at least 120°C, the amine being a tertiary amine containing 14 to 36 carbon atoms in the chains linked to the nitrogen atom, having at most one methyl group linked to the nitrogen atom and at least one aliphatic radical of at least 6 carbon atoms linked to the nitrogen atom and possessing an acid constant Ka of less than $10^{-3}$,
b) incorporating an inert water-immiscible solvent boiling at at least 120°C in the extract if such a solvent has not already been incorporated in step a),
c) distilling the extract, condensing the resulting vapour, separating the water continuously from the two-phase condensate, and returning the organic phase to the distillate process,
d) distilling the extract under reflux after removal of the water and drawing off the liberated gaseous hydrogen chloride at the head of the column, or separating the hydrogen chloride at less than the boiling point of the solvent by passing an inert gas stream therethrough, and
e) returning the amine-containing solvent to the extraction process, characterised in that a carboxylic acid chloride is incorporated in the mixture of amine, solvent and optionally impurities before its use in the extraction or after the removal of water from the extract but before the separation of hydrogen chloride, the carboxylic acid chloride being used in an at least stoichiometric amount based on the primary and secondary amine formed.

2. A process according to claim 1, characterised in that a straight-chain or branched, aliphatic, cycloaliphatic or aromatic hydrocarbon of at least 6 up to 20 carbon atoms which is wholly or largely non-polar is used as the inert solvent boiling at at least 120°C.

3. A process according to claims 1 and 2, characterised in that a carboxylic acid chloride of a linear or branched aliphatic carboxylic acid containing 2 to 22 carbon atoms in the molecule is used.

4. A process according to claims 1 to 3, characterised in that the splitting of the amine hydrochloride is carried out with a bottoms temperature of 120 to 300°C.

**Revendications**

1. Procédé pour l'obtention de chlorure d'hydrogène gazeux par extraction avec des amines d'une solution aqueuse diluée d'acide chlorhydrique, procédé dans lequel

a) on extrait la solution aqueuse d'acide chlorhydrique avec une amine ou un mélange obtenu à partir d'une amine et d'un solvant inerte non miscible à l'eau, bouillant à 120°C au moins, en utilisant des alkylamines tertiaires renfermant de 14 à 36 atomes de carbone dans les chaînes latérales liées à l'azote, dont au plus un groupe méthyle lié à l'azote et au moins un reste aliphatique lié à l'azote et renfermant au moins 6 atomes de carbone, et dans lesquelles la constante d'acide $K_a$ de l'amine est inférieure à $10^{-3}$,
b) on ajoute à l'extrait un solvant inerte, non miscible à l'eau et bouillant à 120°C au moins, pour autant que le solvant n'ait pas

été déjà ajouté dans le stade a),

c) on distille l'extrait, condense les vapeurs qui se forment, sépare en continu l'eau du condensat à deux phases et renvoie la phase organique au processus de distillation,

d) on distille l'extrait au reflux après avoir éliminé l'eau et soutire le chlorure d'hydrogène gazeux libéré à la tête de la colonne, ou bien on sépare le chlorure d'hydrogène, au-dessous du point d'ébullition du solvant, en faisant passer un courant de gaz inerte, et

e) on renvoie au processus d'extraction le solvant renfermant l'amine, ledit procédé étant caractérisé par le fait qu'on ajoute au mélange constitué par l'amine, par le solvant et éventuellement par des impuretés, avant de l'utiliser dans l'extraction ou après avoir deshydraté l'extrait avant la scission du chlorhydrate, des chlorures d'acide carboxylique au moins en quantité stoechiométrique, rapporté aux amines primaires et secondaires formées.

2. Procédé selon la revendication 1, caractérisé par le fait qu'on utilise comme solvants inertes des hydrocarbures aliphatiques à chaîne droite ou ramifiée, des hydrocarbures cyclo-aliphatiques ou aromatiques, totalement ou largement apolaires et renfermant de 6 à 20 atomes de carbone au moins.

3. Procédé selon les revendications 1 et 2, caractérisé par le fait qu'on utilise des chlorures d'acides carboxyliques aliphatiques linéaires et ramifiés qui renferment dans la molécule de 2 à 22 atomes de carbone.

4. Procédé selon les revendications 1 à 3, caractérisé par le fait qu'on effectue la scission des chlorhydrates d'amine à des températures atteignant 120 à 300° C au pied de la colonne.